# EUROPÄISCHE PATENTANMELDUNG

(11) **EP 3 418 826 A1**
(43) Veröffentlichungstag der Anmeldung: **26.12.2018**
(21) Anmeldenummer: 18174670.2
(22) Anmeldetag: 29.05.2018
(51) Int. Cl.: G05B 19/042, F02D 41/24

(54) **VERFAHREN ZUM BETRIEB EINER VORRICHTUNG**

(30) Priorität: 22.06.2017 DE 102017210484
(71) Anmelder: AUDI AG, 85045 Ingolstadt (DE)
(72) Erfinder: Landerer, Johannes, 85049 Ingolstadt (DE); Kipp, Sebastian, 85276 Pfaffenhofen a.d. Ilm (DE)

(57) **Zusammenfassung**

Verfahren zum Betrieb einer Vorrichtung (1), insbesondere eines Kraftfahrzeugs, die eine Steuereinrichtung (2) und wenigstens eine durch die Steuereinrichtung gesteuerte Einrichtung (4) umfasst, wobei durch eine Speichereinrichtung (7, 14) der gesteuerten Einrichtung (4) oder einer von der Steuereinrichtung (2) unterschiedlichen Komponente (8) der Vorrichtung (1) ein Betriebsparameter der gesteuerten Einrichtung (4) oder der Komponente (8) gespeichert wird, wobei durch die Steuereinrichtung (2) der Betriebsparameter aus der Speichereinrichtung (7, 14) ausgelesen und die gesteuerte Einrichtung (4) in Abhängigkeit des Betriebsparameters gesteuert wird.

## Beschreibung

Die Erfindung betrifft ein Verfahren zum Betrieb einer Vorrichtung, insbesondere eines Kraftfahrzeugs, die eine Steuereinrichtung und wenigstens eine durch die Steuereinrichtung gesteuerte Einrichtung umfasst. Daneben betrifft die Erfindung eine Vorrichtung und eine Kraftfahrzeug.

In vielen Vorrichtungen, beispielsweise in Kraftfahrzeugen, werden Bauteile genutzt, bei denen zwischen verschiedenen artgleichen Bauteilen gewisse insbesondere produktionsbedingte Varianzen auftreten und/oder die ihre Eigenschaften während einer Betriebszeit ändern. Beispielsweise können bei einer Treibstoffeinspritzung geringfügige Unterschiede der genutzten Leitungsquerschnitte und/oder der genutzten Aktorik dazu führen, dass bei gleicher Ansteuerung geringfügig unterschiedliche Treibstoffmengen in einen Brennraum eingespritzt werden. Eine Veränderung eines Bauteils über die Zeit tritt beispielsweise bei Partikelfiltern auf, die im Rahmen ihrer Alterung typischerweise mit zunehmend mehr Partikeln oder anderen Verunreinigungen zugesetzt werden.

Viele Vorrichtungen weisen eine Steuereinrichtung auf, die den Betrieb der Vorrichtung steuert, wobei die Steuereinrichtung programmiert werden kann bzw. zumindest einzelne Betriebsparameter der Steuereinrichtung angepasst werden können, um den Betrieb der Vorrichtung anzupassen. Die oben erläuterten Bauteilvarianzen bzw. alterungsbedingten Veränderungen von Bauteilen können durch eine entsprechende Anpassung der Betriebsparameter bzw. der Programmierung der Steuereinrichtung berücksichtigt werden, um einen möglichst optimalen Betrieb der Vorrichtung auch bei einer Alterung des Bauteils bzw. nach Bauteilwechseln zu gewährleisten. Nachteilig ist hierbei, dass die Werte dieser Betriebsparameter bei einem Bauteilwechsel, also beispielsweise beim Einbau eines neuen Bauteils oder bei einem Austausch von Gebrauchtteilen, die entsprechenden Betriebsparameter zurückgesetzt bzw. auf neue Werte gesetzt werden müssen. Werden beispielsweise Komponenten innerhalb eines Kraftfahrzeugs quergetauscht, werden also beispielsweise zu Testzwecken Komponenten zwischen verschiedenen Zylindern eines Motors ausgetauscht, so müssen die Werte der Betriebsparameter ebenfalls ausgetauscht werden.

Da zwei unterschiedliche Arbeitsschritte, nämlich ein mechanischer Austausch der Bauteile und eine Anpassung der Parametrisierung der Steuereinrichtung, erforderlich sind, ist ein entsprechender Austausch potentiell fehleranfällig. Wird eine große Zahl entsprechender Vorrichtungen genutzt und ein großer Personenkreis tauscht Bauteile dieser Vorrichtungen aus, wie dies beispielsweise bei Kraftfahrzeugen der Fall ist, ist es somit kaum vermeidbar, dass zumindest vereinzelt eine Fehlparametrisierung der Steuereinrichtung auftritt. Dies kann zu Bauteilfehlfunktionen, Bauteilbeschädigungen, vorschneller Alterung oder unnötigem Bauteiltausch bei falsch angenommenen Alterungswerten führen. Neben den technischen Auswirkungen und den negativen Folgen bei den Nutzern entsprechender Vorrichtungen können hierdurch auch zusätzliche Kosten beim Hersteller, insbesondere Gewährleistungskosten, und Imageschäden resultieren.

Ein Ansatz zur Qualitätskontrolle beim Austausch von Komponenten ist aus der Druckschrift DE 10 2006 040 228 A1 bekannt. Komponenten einer Vorrichtung weisen hierbei programmierbare Speichermittel auf, in denen eine überprüfbare Signatur gespeichert ist. Die Signatur hängt von einem der Vorrichtung zugeordneten Identifikationscode ab, so dass erkannt werden kann, wenn eine Komponente unautorisiert ausgetauscht wurde. Zudem wird vorgeschlagen, unterschiedliche private Schlüssel zur Erstellung einer entsprechenden Signatur vorzusehen, so dass einzelne Signaturen eindeutig Herstellern bzw. Werkstätten zugeordnet werden können. So könnte beispielsweise bei einer Fehlparametrisierung nach einem Komponentenaustausch anschließend festgestellt werden, durch wen dieser fehlerhafte Komponentenaustausch erfolgte. Nachteilig an dem vorgeschlagenen Vorgehen ist es jedoch, dass ein Quertausch von Komponenten innerhalb einer Vorrichtung nicht erkannt werden kann. Zudem kann zwar nachträglich festgestellt werden, wer für Schäden aufgrund eines nicht korrekt durchgeführten Komponententausches verantwortlich ist, die unmittelbaren Folgen dieses Fehlers, also beispielsweise Komponentenbeschädigungen, können jedoch nicht vermieden werden.

Der Erfindung liegt somit die Aufgabe zugrunde, Fehlermöglichkeiten beim Austausch von Bauteilen einer Vorrichtung auszuschließen bzw. ihre Auswirkungen zu verringern.

Die Aufgabe wird erfindungsgemäß durch ein Verfahren der eingangs genannten Art gelöst, wobei durch eine Speichereinrichtung der gesteuerten Einrichtung oder einer von der Steuereinrichtung unterschiedlichen Komponente der Vorrichtung ein Betriebsparameter der gesteuerten Einrichtung oder der Komponente gespeichert wird, wobei durch die Steuereinrichtung der Betriebsparameter aus der Speichereinrichtung ausgelesen und die gesteuerte Einrichtung in Abhängigkeit des Betriebsparameters gesteuert wird.

Erfindungsgemäß wird somit vorgeschlagen, Betriebsparameter, die für den Betrieb der Komponente bzw. der gesteuerten Einrichtung relevant sind, nicht zentral in einer Steuereinrichtung zu hinterlegen, die die gesteuerte Einrichtung steuert, sondern für die einzelnen Bauteile, also für die gesteuerte Einrichtung bzw. die Komponente, lokal eine Speichereinrichtung vorzusehen, die die relevanten Betriebsparameter speichert. Wird somit die gesteuerte Einrichtung oder die Komponente durch ein neues oder gebrauchtes Exemplar ersetzt oder in der Vorrichtung quergetauscht, so erfolgt automatisch ein Betrieb der Komponente bzw. der gesteuerten Einrichtung mit dem korrekten Betriebsparameter, da dieser von der Steuereinrichtung neu eingelesen und anschießend die gesteuerte Einrichtung entsprechend dieses Betriebsparameters gesteuert wird.

Wird somit beispielsweise ein Partikelfilter durch ein neues Exemplar ersetzt, kann, da die Beladung des Partikelfilters lokal gespeichert wird, erkannt werden, dass der nun vorhandene Partikelfilter nicht mehr beladen ist. Erfolgt beispielsweise ein Quertausch von verschiedenen beladenen Partikelfiltern in Kraftfahrzeugen, so wird der Betrieb der Vorrichtung ebenfalls automatisch auf die nun veränderten Beladungen angepasst. Ähnliches gilt dann, wenn ein Bauteil durch ein neues Bauteil ersetzt wird, das beispielsweise aufgrund von Bauteiltoleranzen geringfügig andere Eigenschaften aufweist. Durch die lokale Speicherung des Betriebsparameters wird dies nach einem Bauteilaustausch automatisch beim Betrieb der Vorrichtung berücksichtigt.

Bezüglich der Bauteile der Vorrichtung wird vorliegend zwischen gesteuerten Einrichtungen und anderen Komponenten unterschieden. Eine gesteuerte Einrichtung ist unmittelbar durch die Steuereinrichtung steuerbar. Gesteuerte Einrichtungen können eine Kommunikationsschnittstelle umfassen, um mit der Steuereinrichtung zu kommunizieren. Da entsprechende Kommunikationseinrichtungen häufig ohnehin Prozessoren und/oder Speicher umfassen, ist es möglich, Komponenten einer solchen Kommunikationseinrichtung als Speichereinrichtung mit zu benutzten, das heißt letztlich den Betriebsparameter in der Kommunikationseinrichtung zu speichern. Andere Komponenten können insbesondere Komponenten sein, die nicht direkt durch die Steuereinrichtung gesteuert werden, deren Eigenschaften jedoch den Betrieb einer gesteuerten Einrichtung beeinflussen. Dies können beispielsweise Rohrleitungen, Filter und andere mechanische Bauelemente sein.

In dem erfindungsgemäßen Verfahren können durch die Speichereinrichtung einer Komponente oder einer gesteuerten Einrichtung auch mehrere Betriebsparameter gespeichert werden, die durch die Steuereinrichtung ausgelesen und zur Steuerung der gesteuerten Einrichtung genutzt werden. Eine Steuereinrichtung kann mehrere gesteuerte Einrichtungen steuern, die optional Speichereinrichtungen aufweisen können, die Betriebsparameter speichern, und/oder die Komponenten umfassen können, die eine solche Speichereinrichtung umfassen.

Die Steuereinrichtung ist vorzugsweise separat von der gesteuerten Einrichtung bzw. der Komponente ausgebildet. Sie kann die gesteuerte Einrichtung oder die gesteuerten Einrichtungen drahtgebunden, beispielsweise über einen Fahrzeugbus, oder drahtlos, beispielsweise über eine Funkverbindung, steuern. Das Auslesen der Speichereinrichtung kann über den gleichen Kommunikationskanal erfolgen, wie das Steuern der gesteuerten Einrichtung, es ist jedoch auch möglich, separate Kommunikationskanäle vorzusehen, die ebenfalls drahtlos oder drahtgebunden sein können.

Die gesteuerte Einrichtung und/oder die Komponente können separat von der Vorrichtung bereitgestellt werden und vor dem Auslesen des Betriebsparameters in einem Montageschritt in oder an der Vorrichtung angebracht werden. Durch den Montageschritt wird die gesteuerte Einrichtung bzw. die Komponente somit Teil der Vorrichtung. Wie bereits vorangehend erläutert ist die lokale Speicherung des Betriebsparameters insbesondere dann vorteilhaft, wenn gesteuerte Einrichtungen oder Komponenten neu in die Vorrichtung eingebaut, getauscht oder innerhalb der Vorrichtung gewechselt werden.

Vor dem Montageschritt kann wenigstens eine Eigenschaft der gesteuerten Einrichtung oder der Komponente ermittelt werden, wonach der Betriebsparameter in Abhängigkeit der Eigenschaft bestimmt und in der Speichereinrichtung gespeichert wird. Dieses Vorgehen ist besonders vorteilhaft, wenn der Betriebsparameter eine Eigenschaft der gesteuerten Einrichtung bzw. Komponente betrifft, die von Anfang an vorhanden ist, also beispielsweise eine Eigenschaftsabweichung durch produktionsbedingte Toleranzen. Beispielsweise kann bei Einspritzeinrichtungen zum Einspritzen von Kraftstoff die tatsächlich injizierte Treibstoffmenge bei einer identischen Ansteuerung zwischen verschiedenen Einspritzeinrichtungen bauteilbedingt voneinander abweichen. Diese Abweichungen können gemessen werden und ein entsprechender Betriebsparameter kann bestimmt und in der Einspritzeinrichtung gespeichert werden, um diese Toleranzen zumindest weitgehend zu kompensieren. Beispielsweise kann eine Dauer des Einspritzvorgangs angepasst werden.

Alternativ oder ergänzend kann durch die Steuereinrichtung eine Veränderung des Betriebsparameters ermittelt und der veränderte Betriebsparameter kann in der Speichereinrichtung gespeichert werden. Der Betriebsparameter kann somit ein Lernwert sein, der im laufenden Betrieb der Komponente bzw. der gesteuerten Einrichtung erlernt wird. Ein solcher Betriebsparameter kann beispielsweise einen Alterungszustand beschreiben. Beispielsweise kann ein Zähler mit zunehmender Betriebszeit hochgezählt werden. Es ist jedoch auch möglich, dass Auswirkungen der Veränderung der Komponente oder der gesteuerten Einrichtung über die Zeit oder Faktoren, die diese Veränderung beeinflussen, sensorisch erfasst werden und der Betriebsparameter dementsprechend angepasst wird. Soll beispielsweise ein Beladungswert eines Partikelfilters als Betriebsparameter erfasst werden bzw. der Betriebsparameter soll von einem solchen Beladungswert abhängen, so kann die Anpassung des Betriebsparameters beispielsweise in Abhängigkeit einer sensorisch erfassten Partikelbeladung des zugeführten Fluids oder eines gemessenen Druckabfalls am Partikelfilter ermittelt werden.

Die Komponente kann aus einer mechanischen Teilkomponente und einer daran befestigten Speicherkomponente, die die Speichereinrichtung umfasst, zusammengesetzt sein. Beispielsweise kann an einem Luftfilter, einem Zylinderkopf, einer Rohrleitung oder Ähnlichem eine solche Speicherkomponente befestigt werden, um eine komponentenseitige Speicherung des Betriebsparameters zu ermöglichen. Die Speicherkomponente umfasst vorzugsweise eine Kommunikationsschnittstelle zur drahtlosen oder drahtgebundenen Kommunikation mit der Steuereinrichtung. Die Speicherkomponente kann aus einem Steuerelement, beispielsweise einem Mikrocontroller, einer Speichereinrichtung, beispielsweise einem Flashspeicher, einem gepufferten RAM-Speicher, einem PROM oder EPROM, und einem Anschlusselement, beispielsweise einem Stecker, oder einer Einrichtung zur drahtlosen Kommunikation, bestehen. Die Speichereinrichtung kann insbesondere in das Steuerelement integriert sein. Beispielsweise weisen einige Mikrocontroller interne Speicherbereiche auf, die als Speichereinrichtung genutzt werden können.

Die Speicherkomponente kann, beispielsweise durch Vernieten, Verschrauben oder Verkleben, an der mechanischen Teilkomponente befestigt sein.

Die mechanische Teilkomponente wird insbesondere beim Betrieb der Vorrichtung bzw. der gesteuerten Einrichtung nicht bestromt und/oder weist keine elektrischen Komponenten auf. Die mechanische Teilkomponente kann beispielsweise ein Partikelfilter, ein Zylinderkolben oder eine Rohrleitung sein.

Durch die Steuereinrichtung kann nach dem Auslesen des Betriebsparameters aus der Speichereinrichtung eine Initialisierungsbedingung ausgewertet werden, deren Erfüllung von dem Betriebsparameter abhängt, wobei bei Erfüllung der Initialisierungsbedingung ein interner Parameter der Steuereinrichtung, von dem die Erfüllung der Initialisierungsbedingung abhängt, und/oder der auf der Speichereinrichtung gespeicherte Betriebsparameter derart verändert werden, dass die Initialisierungsbedingung nicht mehr erfüllt wird. Die Erfüllung der Initialisierungsbedingung kann insbesondere einen Austausch der gesteuerten Einrichtung bzw. der Komponente anzeigen.

Beispielsweise kann nach der Herstellung der gesteuerten Einrichtung bzw. der Komponente ein fester Initialisierungswert eingestellt werden und die Initialisierungsbedingung kann überprüfen, ob der Betriebsparameter diesen festen Initialisierungswert aufweist. Dies ist vorteilhaft, da potentiell eine interne Konfiguration der Steuereinrichtung angepasst werden soll bzw. der oder ein Betriebsparameter, der auf der Speichereinrichtung gespeichert ist, in Abhängigkeit von weiteren Parameters angepasst werden soll. Die Initialisierungsbedingung kann alternativ auch dann erfüllt sein, wenn der gespeicherte Betriebsparameter um mehr als einen vorgegebenen Wert von einer lokalen Kopie des Betriebsparameters, der in der Steuereinrichtung gespeichert ist, abweicht. In diesem Fall kann auch erkannt werden, wenn eine gesteuerte Einrichtung bzw. Komponente durch eine bereits gebrauchte Einrichtung bzw. Komponente ersetzt wird.

Neben dem erfindungsgemäßen Verfahren betrifft die Erfindung eine Vorrichtung mit einer Steuereinrichtung und wenigstens einer durch die Steuereinrichtung gesteuerten Einrichtung, wobei durch eine Speichereinrichtung der gesteuerten Einrichtung oder einer von der Steuereinrichtung unterschiedlichen Komponente der Vorrichtung ein Betriebsparameter der gesteuerten Einrichtung oder der Komponente gespeichert oder speicherbar ist, wobei die Steuereinrichtung dazu eingerichtet ist, den Betriebsparameter aus der Speichereinrichtung auszulesen und die gesteuerte Einrichtung in Abhängigkeit des Betriebsparameters zu steuern. Die Vorrichtung, insbesondere die gesteuerte Einrichtung, die Steuereinrichtung und/oder die Komponente, kann bzw. können zur Durchführung des erfindungsgemäßen Verfahrens eingerichtet sein. Die erfindungsgemäße Vorrichtung kann mit den zu dem erfindungsgemäßen Verfahren erläuterten Merkmalen mit den dort genannten Vorteilen weitergebildet werden und umgekehrt.

Die Steuereinrichtung und die gesteuerte Einrichtung sind vorzugsweise separate Komponenten, die drahtlos und/oder drahtgebunden miteinander kommunizieren. Die Komponente kann separat von der gesteuerten Einrichtung ausgebildet sein. Der Betriebsparameter kann wie vorangehend erläutert vor der Montage der gesteuerten Einrichtung bzw. der Komponente in bzw. an der Vorrichtung ermittelt und gespeichert werden und/oder im laufenden Betrieb aktualisiert werden.

Durch die Steuereinrichtung kann eine Veränderung des Betriebsparameters ermittelbar sein und der veränderte Betriebsparameter kann in der Speichereinrichtung speicherbar sein.

Die Komponente kann aus einer mechanischen Teilkomponente und einer daran befestigten Speicherkomponente, die die Speichereinrichtung umfasst, zusammengesetzt sein.

Die Speicherkomponente kann ein Befestigungselement, einen Steuerbaustein und ein Anschlusselement zur Verbindung mit der Steuereinrichtung aufweisen. Sie kann insbesondere aus den genannten Komponenten gebildet sein. Der Steuerbaustein kann beispielsweise ein Mikrocontroller sein. Die Speichereinrichtung kann durch den Steuerbaustein bereitgestellt werden oder separat hiervon ausgebildet sein.

Neben der erfindungsgemäßen Vorrichtung betrifft die Erfindung ein Kraftfahrzeug, wobei das Kraftfahrzeug eine erfindungsgemäße Vorrichtung ist oder eine solche umfasst. Kraftfahrzeuge weisen eine Vielzahl von Komponenten bzw. gesteuerten Einrichtungen auf, die potentiell während der Nutzungsdauer des Kraftfahrzeugs getauscht werden. Das erfindungsgemäß vorgeschlagene Vorgehen ist somit besonders vorteilhaft.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ausführungsbeispiel einer erfindungsgemäßen Vorrichtung, nämlich eines Kraftfahrzeugs, durch die ein Ausführungsbeispiel des erfindungsgemäßen Verfahrens ausführbar ist, und
- Fig. 2: eine Detailansicht einer Komponente des in Fig. 1 gezeigten Kraftfahrzeugs.

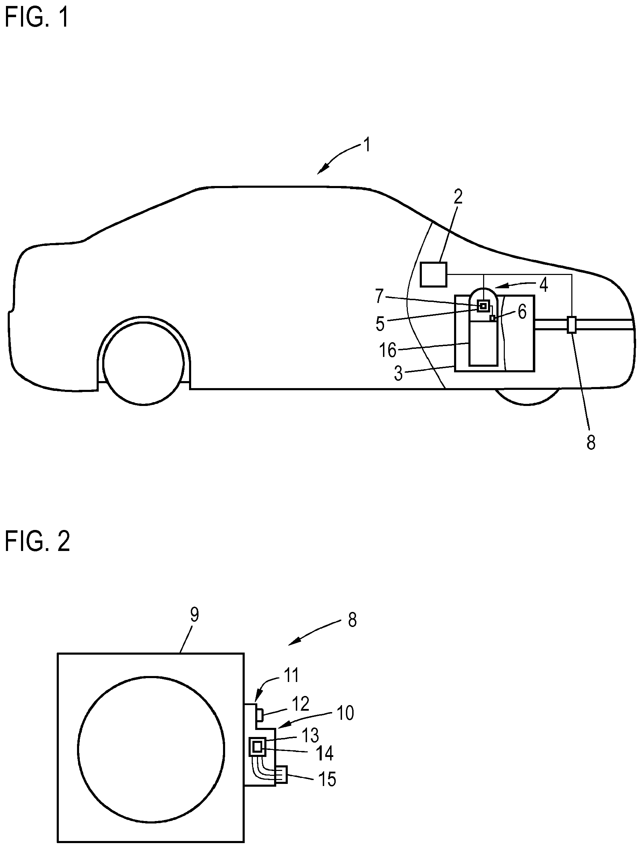

Fig. 1 zeigt eine Vorrichtung 1, nämlich ein Kraftfahrzeug, mit einer Steuereinrichtung 2, die im gezeigten Beispiel der Motorsteuerung dient, und einer durch diese Steuereinrichtung 2 gesteuerten Einrichtung 4. Die gesteuerte Einrichtung 4 ist eine Einspritzeinrichtung eines Zylinders 16 eines Motors 3 des Kraftfahrzeugs. Die Größenverhältnisse der einzelnen Komponenten des Kraftfahrzeugs sind aus Übersichtlichkeitsgründen nicht korrekt wiedergegeben. Die Einrichtung 4 wird über die Steuereinrichtung 2 über einen Bus gesteuert und weist daher eine Kommunikationseinrichtung 5 auf, die eine lokale Aktorik 6 steuert, um Treibstoff in den Brennraum des Zylinders 16 einzuspritzen.

Aufgrund von bauteilbedingten Toleranzen kann die bei einem bestimmten Steuersignal eingespritzte Treibstoffmenge zwischen verschiedenen Einspritzeinrichtungen 4 der gleichen Art bzw. Bauserie geringfügig variieren. Um dennoch einen optimalen Betrieb des Motors 3 zu erreichen, sollen diese produktionsbedingten Toleranzen möglichst weitgehend kompensiert werden, womit unabhängig von der konkret genutzten Einspritzeinrichtung 4 jeweils die gewünschte Einspritzmenge mit hoher Genauigkeit erreicht werden kann.

Um dies zu ermöglichen, steuert die Steuereinrichtung 2 die Einspritzeinrichtung in Abhängigkeit eines Betriebsparameters an, der z. B. einen Skalierungsfaktor für die Länge des Einspritzvorganges angeben kann. Um eine aufwändige Konfiguration im Rahmen der Herstellung des Kraftfahrzeugs bzw. bei einem Austausch der gesteuerten Einrichtung 4 zu vermeiden, wird der Betriebsparameter im Rahmen der Herstellung der gesteuerten Einrichtung 4 auf einer Speichereinrichtung 7 der gesteuerten Einrichtung 4 gespeichert. Die Speichereinrichtung 7 kann beispielsweise in die Kommunikationseinrichtung 5 integriert sein, da entsprechende Kommunikationseinrichtungen 5 häufig ohnehin Möglichkeiten zum Speichern von Daten umfasst.

Zu bestimmten Zeitpunkten, beispielsweise bei jedem Einspritzvorgang, vorzugsweise jedoch nur bei jedem Starten des Kraftfahrzeugs, liest die Steuereinrichtung 2 den Betriebsparameter von der Speichereinrichtung 7 aus und steuert anschließend den Betrieb der gesteuerten Einrichtung 4 in Abhängigkeit des ausgelesenen Betriebsparameters.

Der Betriebsparameter kann ermittelt werden, bevor die gesteuerte Einrichtung 16 in der Vorrichtung 1 bzw. im Motor 3 montiert wird. Eine Eigenschaft der gesteuerten Einrichtung 4, beispielsweise eine Einspritzmenge bei einem bestimmten Steuersignal, kann bereits im Rahmen der Produktion oder anschließend, beispielsweise im Rahmen einer Qualitätssicherung, gemessen werden und aus dieser Eigenschaft kann der Betriebsparameter bestimmt und auf der Speichereinrichtung 7 gespeichert werden.

Der Betrieb des Motors 3 ist auch von einem Zustand rein passiver Komponenten abhängig, weshalb die gesteuerte Einrichtung 4 auch in Abhängigkeit von Eigenschaften von solchen Komponenten gesteuert werden soll. Dies wird am Beispiel der Komponente 8, einem Partikelfilter, der das vom Motor 3 ausgestoßene Abgas filtert, erläutert.

Die Komponente 8 ist in Fig. 2 schematisch dargestellt. Der Partikelfilter selbst bildet eine mechanische Teilkomponente 9, die selbst keine elektrischen Bauteile aufweist. An dieser mechanischen Teilkomponente 9 ist eine Speicherkomponente 10 befestigt, die durch ein Befestigungselement 11, einen Steuerbaustein 13 und ein Anschlusselement 15 gebildet wird. Das Befestigungselement 11 ist ein Gehäuse mit einer Schrauböse, durch die die Schraube 12 geführt ist, um die Speicherkomponente 10 an der mechanischen Teilkomponente 9 zu verschrauben. Als Steuerbaustein 13 wird ein Mikrocontroller genutzt. Dieser implementiert einerseits die Kommunikation mit der Steuereinrichtung 2 über das Anschluss-element 15, andererseits ist in den Mikrocontroller bereits Speicher integriert, der als Speichereinrichtung 14 der Komponente 8 dient. Das Anschlusselement 15 kann ein Stecker oder eine Buchse sein, mit der die Speicherkomponente 10 beispielsweise an einen Fahrzeugbus angeschlossen werden kann.

Die Steuereinrichtung 2 liest zu bestimmten Zeiten, wie vorangehend erläutert, den Betriebsparameter aus der Speichereinrichtung 14 aus, und steuert anschließend die gesteuerte Einrichtung 4 bzw. den Motor 3 in Abhängigkeit dieses Betriebsparameters. Als Betriebsparameter wird hierbei insbesondere eine Beladung des Partikelfilters gespeichert, die bei einem neu hergestellten Partikelfilter Null ist und über die Zeit ansteigt. Beispielsweise kann der gespeicherte Betriebsparameter durch die Speichereinrichtung 2 regelmäßig erhöht werden und der aktualisierte Betriebsparameter kann in der Speichereinrichtung 14 gespeichert werden. Wird der Partikelfilter ausgewechselt oder werden verschiedene Partikelfilter innerhalb der Vorrichtung 1 miteinander getauscht, so liegt in der Steuereinrichtung 2 stets der zum genutzten Partikelfilter passende Beladungswert vor, da dieser lokal in der Speichereinrichtung 14 gespeichert ist und durch die Steuereinrichtung 2 von dort ausgelesen wird.

Es ist vorteilhaft, wenn die Steuereinrichtung 2 erkennt, wenn die Komponente 8 bzw. die gesteuerte Einrichtung 4 ausgetauscht wurde. Hierzu sind zwei Ansätze möglich. In der Speichereinrichtung 7, 14 kann bei einer neuen Komponente bzw. neuen gesteuerten Einrichtung 4 ein definierter Wert für einen bestimmten Betriebsparameter stehen, der der Steuereinrichtung 2 anzeigt, dass die Komponente 8 bzw. die gesteuerte Einrichtung 4 neu ist. Hierdurch kann eine Aktualisierung bestimmter interner Parameter der Steuereinrichtung 2 ausgelöst werden. Beispielsweise kann ein Betriebszeitzähler zurückgesetzt werden. Durch die Steuereinrichtung wird anschließend der Initialisierungswert überschrieben, so dass keine erneute Initialisierung bei der nächsten Abfrage des Betriebsparameters erfolgt.

Um auch einen Austausch von gebrauchten Komponenten zu erkennen, kann hingegen für die in den Speichereinrichtungen 7, 14 gespeicherten Betriebsparameter jeweils eine lokale Kopie in der Steuereinrichtung 2 hinterlegt werden. Nach dem Auslesen der Betriebsparameter aus den Speichereinrichtungen 7, 14 kann der ausgelesene Wert mit der lokalen Kopie verglichen werden und, falls der ausgelesene Wert zu stark von der lokalen Kopie abweicht, davon ausgegangen werden, dass die Komponente 8 bzw. die gesteuerte Einrichtung gewechselt wurde.

## Patentansprüche

1. Verfahren zum Betrieb einer Vorrichtung (1), insbesondere eines Kraftfahrzeugs, die eine Steuereinrichtung (2) und wenigstens eine durch die Steuereinrichtung gesteuerte Einrichtung (4) umfasst, wobei durch eine Speichereinrichtung (7, 14) der gesteuerten Einrichtung (4) oder einer von der Steuereinrichtung (2) unterschiedlichen Komponente (8) der Vorrichtung (1) ein Betriebsparameter der gesteuerten Einrichtung (4) oder der Komponente (8) gespeichert wird, wobei durch die Steuereinrichtung (2) der Betriebsparameter aus der Speichereinrichtung (7, 14) ausgelesen und die gesteuerte Einrichtung (4) in Abhängigkeit des Betriebsparameters gesteuert wird,
**dadurch gekennzeichnet,**
**dass** durch die Steuereinrichtung (2) eine Veränderung des Betriebsparameters ermittelt und der veränderte Betriebsparameter in der Speichereinrichtung (7, 14) gespeichert wird.

2. Verfahren nach Anspruch 1,
**dadurch gekennzeichnet,**
**dass** die gesteuerte Einrichtung (4) und/oder die Komponente (8) separat von der Vorrichtung (1) bereitgestellt werden und vor dem Auslesen des Betriebsparameters in einem Montageschritt in oder an der Vorrichtung (1) angebracht werden.

3. Verfahren nach Anspruch 2,
**dadurch gekennzeichnet,**
**dass** vor dem Montageschritt wenigstens eine Eigenschaft der gesteuerten Einrichtung (4) oder der Komponente (8) ermittelt wird, wonach der Betriebsparameter in Abhängigkeit der Eigenschaft bestimmt und in der Speichereinrichtung (7, 14) gespeichert wird.

4. Verfahren nach einem der vorangehenden Ansprüche,
**dadurch gekennzeichnet,**
**dass** durch die Steuereinrichtung (2) nach dem Auslesen des Betriebsparameters aus der Speichereinrichtung (7, 14) eine Initialisierungsbedingung ausgewertet wird, deren Erfüllung von dem Betriebsparameter abhängt, wobei bei Erfüllung der Initialisierungsbedingung ein interner Parameter der Steuereinrichtung (2), von dem die Erfüllung der Initialisierungsbedingung abhängt, und/oder der auf der Speichereinrichtung (7, 14) gespeicherte Betriebsparameter derart verändert werden, dass die Initialisierungsbedingung nicht mehr erfüllt wird.

5. Vorrichtung mit einer Steuereinrichtung (2) und wenigstens einer durch die Steuereinrichtung gesteuerten Einrichtung (4), wobei durch eine Speichereinrichtung (7, 14) der gesteuerten Einrichtung (4) oder einer von der Steuereinrichtung (2) unterschiedlichen Komponente (8) der Vorrichtung (1) ein Betriebsparameter der gesteuerten Einrichtung (4) oder der Komponente (8) gespeichert oder speicherbar ist, wobei die Steuereinrichtung (2) dazu eingerichtet ist, den Betriebsparameter aus der Speichereinrichtung (7, 14) auszulesen und die gesteuerte Einrichtung (4) in Abhängigkeit des Betriebsparameters zu steuern,
**dadurch gekennzeichnet,**
**dass** durch die Steuereinrichtung (2) eine Veränderung des Betriebsparameters ermittelbar und der veränderte Betriebsparameter in der Speichereinrichtung (7, 14) speicherbar ist.

6. Vorrichtung nach Anspruch 5,
**dadurch gekennzeichnet,**
**dass** die Komponente (8) aus einer mechanischen Teilkomponente (9) und einer daran befestigten Speicherkomponente (10), die die Speichereinrichtung (14) umfasst, zusammengesetzt ist.

7. Vorrichtung nach Anspruch 6,
**dadurch gekennzeichnet,**
**dass** die Speicherkomponente (10) ein Befestigungselement (11), einen Steuerbaustein (13) und ein Anschlusselement (15) zur Verbindung mit der Steuereinrichtung (2) aufweist.

8. Kraftfahrzeug,
**dadurch gekennzeichnet,**
**dass** es eine Vorrichtung (1) nach einem der Ansprüche 5 bis 7 ist oder umfasst.
